(19) Europäisches Patentamt
European Patent Office
Office européen des brevets

(11) **EP 1 587 723 B1**

(12) **FASCICULE DE BREVET EUROPEEN**

(45) Date de publication et mention de la délivrance du brevet:
**05.09.2007 Bulletin 2007/36**

(21) Numéro de dépôt: **03778384.2**

(22) Date de dépôt: **07.10.2003**

(51) Int Cl.:
*B60T 8/32* *(2006.01)*       *B60T 7/22* *(2006.01)*

(86) Numéro de dépôt international:
**PCT/FR2003/002945**

(87) Numéro de publication internationale:
**WO 2004/031011 (15.04.2004 Gazette 2004/16)**

(54) **SYSTEME DE FREINAGE ET PROCEDE D'ELABORATION D'UNE CONSIGNE DE DECELERATION POUR ACTIONNEURS DE FREIN DE VEHICULE AUTOMOBILE**

BREMSSYSTEM UND BERECHNUNGSVERFAHREN EINES SOLLVERZÖGERUNGSWERTS FÜR BREMSSTELLGLIEDER EINES FAHRZEUGS

BRAKING SYSTEM AND METHOD FOR PRODUCING A DECELERATION SETPOINT FOR MOTOR VEHICLE BRAKE ACTUATORS

(84) Etats contractants désignés:
**AT BE BG CH CY CZ DE DK EE ES FI FR GB GR HU IE IT LI LU MC NL PT RO SE SI SK TR**

(30) Priorité: **07.10.2002 FR 0212414**

(43) Date de publication de la demande:
**26.10.2005 Bulletin 2005/43**

(73) Titulaire: **RENAULT s.a.s.**
**92100 Boulogne Billancourt (FR)**

(72) Inventeurs:
• **BERTHOUD, Yann**
**F-94300 Vincennes (FR)**
• **FERREIRA, Michel**
**F-94000 Creteil (FR)**
• **DE LARMINAT, Philips**
**F-44000 Nantes (FR)**
• **POTHIN, Richard**
**F-92420 Vaucresson (FR)**
• **RICHARD, Arnaud**
**F-78180 MONTIGNY LE BRETONNEUX (FR)**

(56) Documents cités:
WO-A-00/61412         US-A- 4 760 529
US-A- 4 852 950

## Description

L'invention concerne les systèmes de freinage pour véhicule automobile.

Plus particulièrement, l'invention porte sur l'élaboration de consignes ou commandes de décélération destinées à être appliquées aux actionneurs de freins d'un véhicule automobile.

Comme on le sait, lorsqu'un conducteur de véhicule automobile souhaite immobiliser son véhicule, il procède souvent à un dosage de l'effort appliqué sur la pédale de frein à l'approche de l'arrêt afin d'éviter que se produise un à-coup désagréable pour les occupants du véhicule. Cet à-coup provient de la différence entre l'accélération du véhicule au cours du freinage, qui a une valeur fortement négative, et l'accélération du véhicule à l'arrêt, qui est nulle.

Ainsi, pour éviter cet inconvénient, le conducteur doit moduler la pression appliquée sur la pédale de frein en relâchant plus ou moins progressivement cette pression juste avant l'immobilisation du véhicule.

Ce dosage dépend de l'amplitude de l'effort de freinage appliquée aux disques de frein, de la loi reliant la course de la pédale et le freinage obtenu, et de la vitesse du véhicule. Le conducteur doit donc bien connaître son véhicule et être suffisamment concentré pour immobiliser son véhicule confortablement.

Au vu de ce qui précède, le but que vise à atteindre l'invention est de fournir un système de freinage et un procédé d'élaboration d'une consigne de décélération pour actionneurs de frein de véhicule automobile permettant de supprimer les à-coups désagréables que ressentent les occupants d'un véhicule au cours de son arrêt complet, sans nécessiter d'action particulière de la part du conducteur.

Un système de freinage et une procédé d'élaboration d'une consigne de décélération selon les preambules des revendications 1 et 7 sont décrits dans le document US 4760529.

Selon l'invention, il est proposé un système de freinage pour véhicule automobile qui comprend des actionneurs de frein et un calculateur central comprenant des moyens pour élaborer une consigne de décélération à partir d'une consigne de freinage résultant de l'actionnement d'une pédale de frein du véhicule pour asservir la décélération du véhicule sur ladite consigne de décélération.

Selon une caractéristique générale de ce système de freinage, le calculateur comporte des moyens pour calculer une consigne de décélération adoucie à partir d'une dérivée de l'accélération de consigne du véhicule, de la vitesse du véhicule et d'une consigne de décélération finale à atteindre jusqu'à l'arrêt du véhicule, ladite consigne de décélération étant constituée par la valeur minimale parmi la consigne de décélération adoucie et la consigne de freinage.

Le conducteur du véhicule est alors assisté lors de l'immobilisation de son véhicule et n'est dès lors plus obligé de doser son freinage dans la mesure où le système de freinage se charge d'assurer une diminution automatique et progressive de l'effort de freinage jusqu'à obtenir une décélération correspondant à une consigne de décélération finale à atteindre.

En outre, le conducteur conserve la maîtrise du freinage de son véhicule car un enfoncement supérieur de la pédale provoque une augmentation de la force de freinage et un relâchement diminue cette dernière. De surcroît, l'amplitude de l'à-coup final peut être maîtrisée car la décélération finale peut constituer un paramètre de réglage du système de freinage selon l'invention.

De surcroît, l'adoucissement du freinage dépend de l'urgence du freinage. Les paramètres du système de freinage sont fonction de la situation du roulage. En situation d'urgence, le système peut être inhibé pour ne pas intervenir au cours du freinage.

Selon une autre caractéristique de l'invention, la consigne de décélération adoucie $\gamma a$ est élaborée selon la formule :

$$\gamma a = \sqrt{\gamma f^2 + 2\dot{VW}}$$

dans laquelle :

$\gamma f$ est la consigne de décélération finale ;
V est la vitesse du véhicule ; et
W est la dérivée de l'accélération de consigne du véhicule.

Selon encore une autre caractéristique de l'invention, le calculateur comporte des moyens de calcul d'une valeur de la dérivée W de l'accélération de consigne du véhicule permettant d'obtenir une augmentation X de la distance d'arrêt du véhicule résultant de l'application d'une consigne de décélération adoucie, selon la relation

$$W = \sqrt{\frac{1}{24 X \gamma c}\left(\gamma c - \gamma f\right)^3 \left(\gamma c + 3 \gamma f\right)}$$

dans laquelle γc est la consigne de freinage.

Selon un mode de mise en oeuvre avantageux, le calculateur comporte en outre des moyens pour prendre en compte une composante de décélération élaborée directement à partir d'une action sur la pédale de frein ainsi qu'une composante de perturbation externe susceptible d'influer sur la décélération du véhicule, la somme de la composante de décélération et de la composante de perturbation externe constituant ladite commande de freinage.

Il est ainsi possible de prendre en compte tout type de perturbation susceptible de perturber le freinage et, en particulier, la diminution de la décélération du véhicule jusqu'à la décélération finale, en particulier la perturbation provenant du roulage du véhicule en pente.

Cette perturbation peut être calculée à partir de valeurs fournies par des capteurs ou issues de moyens aptes à estimer la composante de perturbation à partir d'une modélisation du système de freinage.

Selon l'invention, il est également proposé un procédé d'élaboration d'une consigne de décélération pour actionneur de frein de véhicule automobile mis en oeuvre au moyen d'un système de freinage tel que défini ci-dessus.

Ce procédé est caractérisé en ce qu'il comporte les étapes consistant à :

- calculer la valeur de la dérivée de l'accélération de consigne du véhicule à partir d'une consigne de freinage résultant de l'actionnement d'une pédale de frein du véhicule, d'une augmentation X de la distance d'arrêt du véhicule résultant de l'application d'une consigne de décélération adoucie et d'une consigne de décélération finale à atteindre jusqu'à l'arrêt du véhicule ;
- calculer la valeur d'une consigne de décélération adoucie à partir de la valeur calculée de la dérivée de l'accélération de consigne à partir de la consigne de décélération finale et de la vitesse du véhicule ; et
- déterminer la valeur minimale parmi la consigne de décélération adoucie et la consigne de freinage résultant de l'actionnement de la pédale de frein du véhicule, la consigne de décélération étant élaborée à partir de la valeur minimale ainsi déterminée.

Selon un mode de mise en oeuvre de ce procédé, préalablement au calcul de la dérivée de l'accélération de consigne, on calcule la consigne de freinage par calcul de la somme entre une consigne de décélération élaborée directement à partir d'une action sur la pédale de frein et une composante de décélération résultant des perturbations susceptibles d'influer sur le freinage.

Selon un autre mode de mise en oeuvre de ce procédé, préalablement au calcul de la dérivée de l'accélération de consigne, on calcule une consigne de décélération finale par extraction de la valeur maximale parmi ladite consigne de décélération finale et ladite composante de décélération.

Selon encore un autre mode de mise en oeuvre du procédé selon l'invention, postérieurement à l'étape de détermination de la valeur minimale entre la consigne de décélération adoucie et la consigne de freinage, on calcule la commande de freinage par sommation de ladite valeur minimale et de la composante de décélération résultant des perturbations susceptibles d'influer sur le freinage.

D'autres buts, caractéristiques et avantages de l'invention apparaîtront à la lecture de la description suivante, donnée uniquement à titre d'exemple non limitatif, et faite en référence aux dessins annexés sur lesquels :

- la figure 1 illustre la structure générale d'un système de freinage pour véhicule automobile ;
- la figure 2 est un schéma synoptique de principe illustrant la structure générale d'un système de freinage de véhicule automobile conforme à l'invention ;
- la figure 3 montre des courbes illustrant la variation de la décélération du véhicule en fonction de sa vitesse, pour différentes consignes de freinage imposées par le conducteur du véhicule ;
- la figure 4 est un organigramme montrant les principales phases du procédé d'élaboration de la consigne de décélération conforme à l'invention ;
- la figure 5 est une courbe montrant la variation de la consigne de décélération appliquée aux actionneurs de frein du véhicule en fonction du temps ;
- la figure 6 est un organigramme illustrant une variante de mise en oeuvre du procédé selon l'invention, tenant compte de la présence d'une perturbation ; et
- la figure 7 illustre la structure d'un système de freinage conforme à l'invention, selon un autre mode de réalisation, apte à déterminer la composante de perturbation à partir d'une modélisation du système.

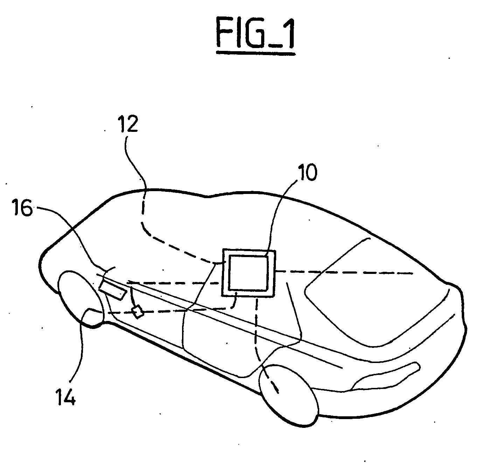

On a représenté sur la figure 1 un système de freinage de véhicule automobile.

Sur cette figure, le signe de référence numérique 10 désigne le calculateur central embarqué à bord du véhicule, et le signe de référence numérique générale 12 désigne les quatre actionneurs de frein du véhicule.

Ce système de freinage comporte un ensemble de capteurs de mesure de la vitesse des roues du véhicule, tel que 14, ainsi qu'un capteur 16 de mesure de la position de la pédale de frein du véhicule.

Le calculateur 10 incorpore des moyens logiciels permettant d'élaborer une consigne de décélération à partir d'une consigne de freinage élaborée à partir de la position de la pédale de frein issue du capteur 16 de manière à asservir la décélération du véhicule.

Plus particulièrement, dans le but d'éviter, voire limiter, tout à-coup susceptible d'apparaître lors de l'arrêt complet du véhicule, le calculateur 10 incorpore des moyens pour calculer une consigne de décélération adoucie diminuant en fonction du temps jusqu'à un niveau de décélération finale suffisamment faible pour atteindre un tel objectif.

Dès lors, la consigne de décélération appliquée aux actionneurs de frein 12 du véhicule est constituée par la valeur minimale parmi la consigne de décélération résultant de l'application d'un effort de freinage sur la pédale de frein et la consigne de décélération ainsi calculée.

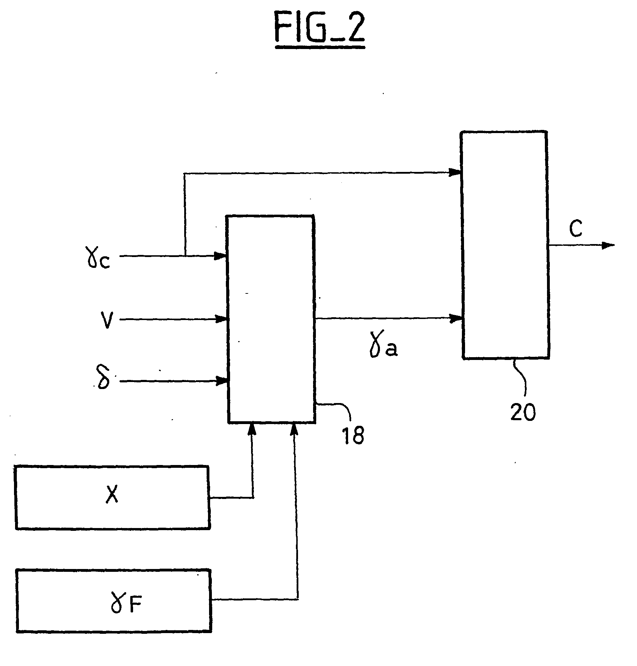

On a représenté sur la figure 2 un schéma synoptique général illustrant la constitution de l'architecture logicielle du calculateur 10 permettant, d'une part, le calcul de la consigne adoucie γa et, d'autre part, l'élaboration de la valeur de commande de freinage C destinée à être appliquée aux actionneurs de frein.

Ainsi, comme on le voit sur cette figure, le calculateur 10 incorpore un premier module logiciel 18 destiné à calculer la valeur γa de la consigne de décélération adoucie à partir, d'une part, de la consigne de freinage γc appliquée par le conducteur, de la vitesse V du véhicule et, de manière optionnelle, des perturbations δ du véhicule et, d'autre part, de paramètres réglables constitués par l'augmentation X de la distance d'arrêt par rapport à un freinage sans décélération adoucie et par la valeur de décélération finale γf à obtenir jusqu'à l'arrêt complet du véhicule pour éviter ou limiter les à-coups lors du freinage.

Par ailleurs, le calculateur 10 comporte un deuxième module logiciel 20 destiné à calculer la commande C par détermination de la valeur minimale parmi la consigne de décélération adoucie γa et la consigne de freinage γc.

En ce qui concerne le calcul de la consigne de décélération adoucie, le premier module 18 calcule cette consigne de décélération γa à partir de la consigne de décélération finale et du jerk ou dérivée W de l'accélération de consigne du véhicule, à partir de la relation suivante :

$$\gamma a = \sqrt{\gamma f^2 + 2VW} \qquad (1)$$

Le jerk est calculé, quant à lui, à partir de la relation :

$$W = \sqrt{\frac{1}{24\,X\gamma c}\left(\gamma c - \gamma f\right)^3\left(\gamma c + 3\gamma f\right)} \qquad (2)$$

Ces calculs permettent l'élaboration d'un profil de décélération qui, à partir de la décélération demandée par le conducteur, impose d'immobiliser le véhicule avec une décélération finale γf tout en garantissant une augmentation de la distance d'arrêt égale à X.

Ainsi, le conducteur conserve la maîtrise de son freinage car si γc augmente, la distance d'arrêt de référence diminue et la consigne adoucie est immédiatement augmentée.

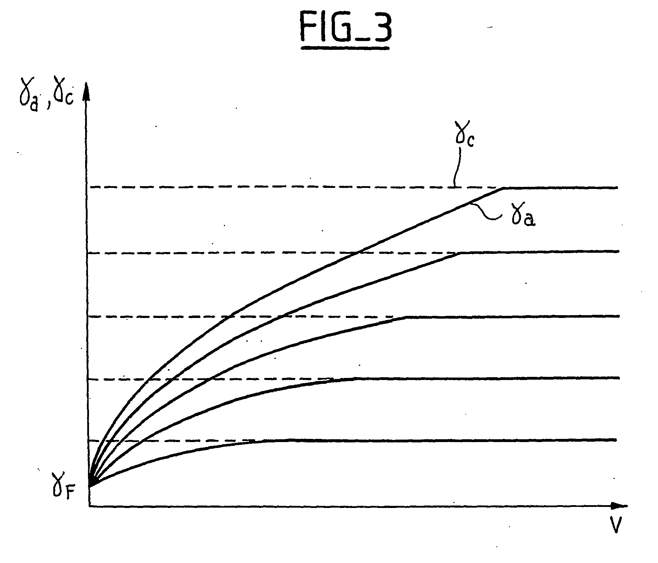

On a en effet représenté sur la figure 3 l'évolution en fonction de la vitesse V de la consigne de décélération adoucie γa pour différentes valeurs de consigne de freinage γc imposées par le conducteur.

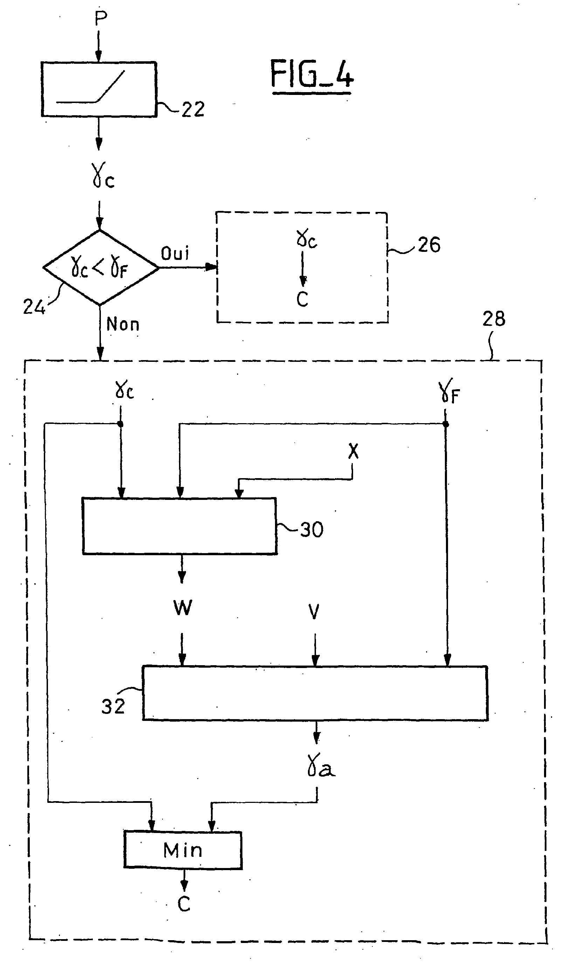

On va maintenant décrire en référence à la figure 4 les principales phases du procédé d'élaboration de la consigne de décélération destinée à être appliquée aux actionneurs de frein 12 du véhicule.

Au cours d'une première étape 22 du procédé, le calculateur 10 élabore la consigne de freinage γc imposée par le conducteur du véhicule, à partir de la position P de la pédale de frein issue du capteur 16.

Lors de l'étape 24 suivante, le calculateur 10 procède à une comparaison entre la consigne de freinage γc ainsi calculée et la consigne de décélération finale γf de manière à déterminer si la consigne de freinage imposée par le conducteur est inférieure à la consigne de décélération finale.

Si tel est le cas, la consigne de décélération C est constituée par la consigne de freinage γc (étape 26).

Au contraire, si tel n'est pas le cas, c'est-à-dire si la consigne de freinage est supérieure à la consigne de décélération finale, au cours d'une phase 28 suivante, le calculateur 10 procède au calcul d'une consigne de décélération adoucie et d'une consigne de décélération C.

Pour ce faire, lors de l'étape 30 suivante, le calculateur 10 procède au calcul du jerk W à partir de la consigne de freinage γc, de l'augmentation de la distance d'arrêt à obtenir, et de la décélération finale γf à obtenir, à l'aide de la relation (2) précédemment mentionnée.

Lors de l'étape 32 suivante, le calculateur 10 procède au calcul de la décélération adoucie γa, selon la relation (1) précédemment mentionnée. La valeur minimale parmi la consigne de freinage γc et la consigne de décélération adoucie γa est utilisée en tant que consigne de décélération C.

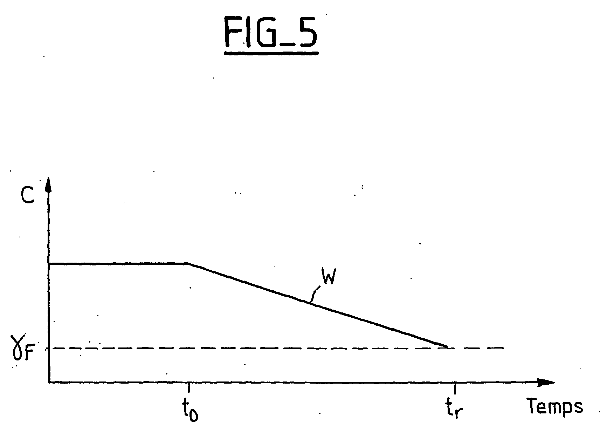

Comme visible sur la figure 5, la décélération ainsi obtenue diminue en fonction du temps, de t0 à tr, jusqu'à la valeur de décélération finale γf permettant, au mieux, d'éliminer complètement tout à-coup au freinage.

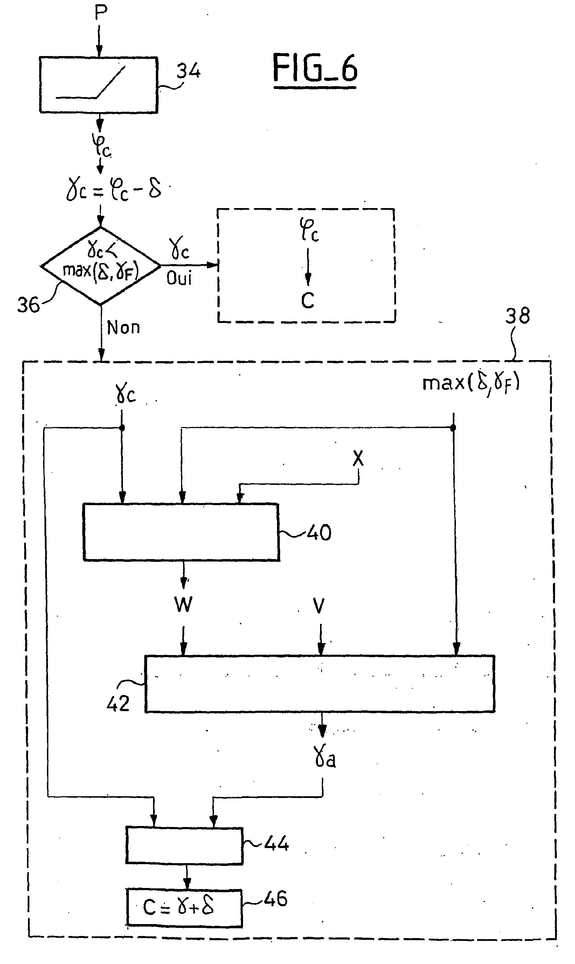

En se référant maintenant à la figure 6, il est également possible, selon un autre mode de mise en oeuvre d'un procédé selon l'invention, de tenir compte de perturbations susceptibles d'influer sur la décélération du véhicule, telles que le roulage du véhicule en pente. On considérera tout d'abord que la valeur de la pente δ est un paramètre mesuré à l'aide de capteurs appropriés. Par convention, cette pente δ est négative en montée car elle contribue à une accélération négative du véhicule.

En présence d'une pente, les calculs précédents doivent être revus car la décélération n'est pas égale à la commande appliquée mais à la somme du freinage et de la décélération due à la pente.

Ainsi, dans ce cas, après mise en oeuvre d'une étape 34 de calcul de la consigne de freinage φc à partir de la position P de la pédale de frein du véhicule, le calculateur 10 calcule, en tant que consigne de freinage, la différence entre la consigne de freinage ainsi calculée φc et la pente δ de sorte que γc=φc-δ.

Lors de l'étape 36 suivante, le calculateur 10 procède à une comparaison entre la consigne de freinage γc ainsi élaborée et la valeur supérieure parmi la pente et la décélération finale.

En effet, la décélération finale ne peut pas être imposée librement. En montée, la décélération finale ne peut être inférieure à la décélération due à la pente.

Ainsi, dans le cas où γc est inférieure à max(-δ,γf), la consigne de décélération C est constituée par la consigne de freinage φc imposée par le conducteur.

Si tel n'est pas le cas, lors de la phase 38 suivante, le calculateur 10 procède, d'une part, au calcul du jerk W (étape 40), à partir de la consigne de freinage γc imposée par le conducteur, de la décélération finale, constituée par la valeur maximale parmi la pente et la consigne de décélération finale, et de l'augmentation de la distance d'arrêt à obtenir X et, d'autre part, procède au calcul de la décélération adoucie γa (étape 42) à partir du jerk W ainsi calculé et de la vitesse V du véhicule.

Lors de l'étape 44 suivante, comme dans l'exemple de réalisation précédemment mentionné, la valeur minimale entre la décélération adoucie γa et la consigne de freinage γc est extraite pour élaborer une consigne de décélération γ puis, lors de l'étape 46 suivante, la consigne de décélération C à utiliser est calculée en sommant la consigne de décélération γ précédemment calculée et la pente δ.

Dans ce qui précède, on a considéré que le véhicule est pourvu de capteurs permettant de déterminer la composante de perturbation dans la décélération du véhicule, en particulier la pente.

En l'absence de tels capteurs, cette composante de perturbation peut être estimée à partir d'une modélisation du système de freinage du véhicule.

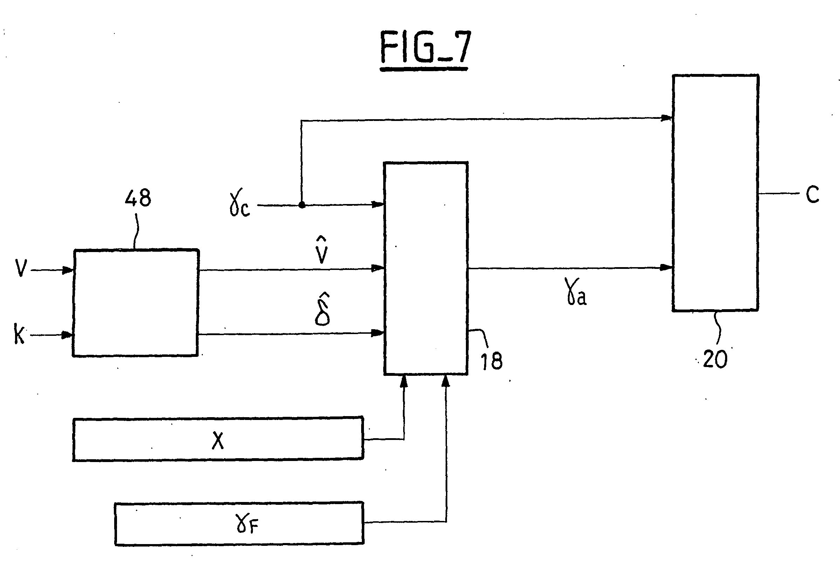

On a représenté sur la figure 7 la structure logicielle du calculateur 10 selon ce mode de mise en oeuvre.

Dans ce cas, le calculateur 10 incorpore un observateur 48 qui possède un modèle du système de freinage et qui estime la vitesse et les perturbations pendant le freinage à partir d'une mesure de la vitesse V de véhicule et de la commande *K* envoyée aux actionneurs.

Il délivre ainsi au premier module 18 de calcul de la décélération adoucie γa une valeur de vitesse estimée $\hat{V}$ et une valeur de perturbation estimée $\hat{\delta}$ permettant, conjointement avec la valeur de la consigne de freinage γc imposée par le conducteur, de l'augmentation de la distance de freinage X à obtenir et d'une décélération finale γf à obtenir, le calcul de cette décélération adoucie γa, laquelle est utilisée, comme indiqué précédemment, par le deuxième module 20 pour fournir la consigne de décélération C.

En ce qui concerne l'observateur 48, celui-ci procède au calcul de la vitesse estimée $\hat{V}$ et des perturbations $\hat{\delta}$ à partir des équations d'états suivantes :

$$\dot{\hat{v}} = F(u) + \hat{\delta} + k_1 (v - \hat{v})$$

$$\dot{\hat{\delta}} = k_2 (v - \hat{v})$$

dans laquelle *F(u)* désigne l'effort de freinage appliqué aux actionneurs de frein.

Ainsi, sous forme d'état, l'observateur s'écrit :

$$\frac{d}{dt}\begin{pmatrix} \hat{v} \\ \hat{\delta} \end{pmatrix} = \begin{pmatrix} 0 & 1 \\ 0 & 0 \end{pmatrix}\begin{pmatrix} \hat{v} \\ \hat{\delta} \end{pmatrix} + \begin{pmatrix} 1 \\ 0 \end{pmatrix} F(u) - \begin{pmatrix} K1 & 0 \\ K2 & 0 \end{pmatrix}\begin{pmatrix} \hat{v} \\ \hat{\delta} \end{pmatrix}$$

$$v = \begin{pmatrix} 1 & 0 \end{pmatrix}\begin{pmatrix} \hat{v} \\ \hat{\delta} \end{pmatrix}$$

$$\dot{\hat{v}} = \begin{pmatrix} 0 & 1 \end{pmatrix}\begin{pmatrix} \hat{v} \\ \hat{\delta} \end{pmatrix} + F(u)$$

## Revendications

1.  Système de freinage pour véhicule automobile, comprenant des actionneurs de frein (12) et un calculateur central (10) comprenant des moyens pour élaborer une consigne de décélération à partir d'une consigne de freinage résultant de l'actionnement d'une pédale de frein du véhicule pour asservir la décélération du véhicule sur ladite consigne de décélération, **caractérisé en ce que** le calculateur (10) comporte des moyens pour calculer une consigne de décélération adoucie ($\gamma$a) à partir d'une dérivée (W) de l'accélération de consigne du véhicule, de la vitesse (V) du véhicule et d'une consigne de décélération finale ($\gamma$f) à atteindre jusqu'à l'arrêt du véhicule, ladite consigne de décélération (C) étant constituée par la valeur minimale parmi la consigne de décélération adoucie ($\gamma$a) et la consigne de freinage ($\gamma$c).

2.  Système de freinage selon la revendication 1, **caractérisé en ce que** la consigne de décélération adoucie $\gamma$a est élaborée selon la formule :

$$\gamma a = \sqrt{\gamma f^2 + 2VW}$$

dans laquelle :

$\gamma$f est la consigne de décélération finale ;
V est la vitesse du véhicule ; et
W est la dérivée de l'accélération de consigne du véhicule.

3.  Système de freinage selon la revendication 2, **caractérisé en ce que** le calculateur (10) comporte des moyens de calcul d'une valeur de la dérivée W de l'accélération de consigne du véhicule permettant d'obtenir une augmentation X de la distance d'arrêt du véhicule résultant de l'application d'une consigne de décélération adoucie, selon la relation :

$$W = \sqrt{\frac{1}{24X\gamma c}(\gamma c - \gamma f)^3 (\gamma c + 3\gamma f)}$$

dans laquelle $\gamma$c est la consigne de freinage.

**4.** Système de freinage selon l'une quelconque des revendications 1 à 3, **caractérisé en ce que** le calculateur (10) comporte en outre des moyens pour prendre en compte une composante de décélération élaborée directement à partir d'une action sur la pédale de frein ainsi qu'une composante de perturbation externe susceptible d'influer sur la décélération du véhicule, la somme de la composante de décélération et de la composante de perturbation externe constituant ladite commande de freinage.

**5.** Système de freinage selon la revendication 4, **caractérisé en ce que** la composante de perturbation externe est une composante de décélération résultant d'un roulage en pente du véhicule.

**6.** Système selon l'une des revendications 4 et 5, **caractérisé en ce que** le calculateur (10) comporte en outre des moyens pour estimer la composante de perturbation à partir d'une modélisation du système de freinage.

**7.** Procédé d'élaboration d'une consigne de décélération pour actionneurs de frein de véhicule automobile, mis en oeuvre au moyen d'un système de freinage selon l'une quelconque des revendications 1 à 6, **caractérisé en ce qu'**il comporte les étapes consistant à :

- calculer la valeur de la dérivée (W) de l'accélération de consigne du véhicule à partir d'une consigne de freinage résultant de l'actionnement d'une pédale de frein du véhicule, d'une augmentation (X) de la distance d'arrêt du véhicule résultant de l'application d'une consigne de décélération adoucie ($\gamma$a) et d'une consigne de décélération finale ($\gamma$f) à atteindre jusqu'à l'arrêt du véhicule ;
- calculer la valeur d'une consigne de décélération adoucie ($\gamma$a) à partir de la valeur calculée de la dérivée de l'accélération de consigne à partir de la consigne de décélération finale ($\gamma$f) et de la vitesse du véhicule ;
- déterminer la valeur minimale parmi la consigne de décélération adoucie ($\gamma$a) et la consigne de freinage ($\gamma$c) résultant de l'actionnement de la pédale de frein du véhicule, la consigne de décélération (C) étant élaborée à partir de la valeur minimale ainsi déterminée.

**8.** Procédé selon la revendication 7, **caractérisé en ce que** préalablement au calcul de la dérivée de l'accélération de consigne, on calcule la consigne de freinage par calcul de la somme d'une consigne de décélération élaborée directement à partir d'une action sur la pédale de frein et d'une composante de décélération résultant des perturbations susceptibles d'influer sur le freinage.

**9.** Procédé selon la revendication 8, **caractérisé en ce que** préalablement au calcul de la dérivée de l'accélération de consigne, on calcule une consigne de décélération finale par extraction de la valeur maximale parmi ladite consigne de décélération finale et ladite composante de décélération.

**10.** Procédé selon la revendication 9, **caractérisé en ce que** postérieurement à l'étape de détermination de la valeur minimale entre la consigne de décélération adoucie et la consigne de freinage, on calcule la commande de freinage par sommation de ladite valeur minimale et de la composante de décélération résultant des perturbations susceptibles d'influer sur le freinage.

**Claims**

**1.** Braking system for a motor vehicle, comprising brake actuators (12) and a central computer (10) comprising means for generating a deceleration setting based on a braking setting resulting from the actuation of a brake pedal of the vehicle in order to control the deceleration of the vehicle on the said deceleration setting, **characterized in that** the computer (10) comprises means for computing a softened deceleration setting ($\gamma$a) based on a differential coefficient (W) of the set acceleration of the vehicle, on the speed (V) of the vehicle and on a final deceleration setting ($\gamma$f) to be achieved until the vehicle stops, the said deceleration setting (C) being made up of the minimum value from among the softened deceleration setting ($\gamma$a) and the braking setting ($\gamma$c).

**2.** Braking system according to Claim 1, **characterized in that** the softened deceleration setting $\gamma$a is generated according to the formula:

$$\gamma a = \sqrt{\gamma f^2 + 2VW}$$

in which:

$\gamma$f is the final deceleration setting;
V is the speed of the vehicle; and
W is the differential coefficient of the set acceleration of the vehicle.

3. Braking system according to Claim 2, **characterized in that** the computer (10) comprises means for computing a value of the differential coefficient W of the set acceleration of the vehicle making it possible to obtain an increase X in the stopping distance of the vehicle resulting from the application of a softened deceleration setting, according to the relation:

$$W = \sqrt{\frac{1}{24X\gamma c}(\gamma c - \gamma f)^3(\gamma c + 3\gamma f)}$$

in which $\gamma$c is the braking setting.

4. Braking system according to any one of Claims 1 to 3, **characterized in that** the computer (10) also comprises means for taking account of a deceleration component generated directly from an action on the brake pedal and an external interference component capable of influencing the deceleration of the vehicle, the total of the deceleration component and the external interference component making up the said braking command.

5. Braking system according to Claim 4, **characterized in that** the external interference component is a deceleration component resulting from the vehicle running on a slope.

6. System according to one of Claims 4 and 5, **characterized in that** the computer (10) also comprises means for estimating the interference component based on a modelling of the braking system.

7. Method for generating a deceleration setting for motor vehicle brake actuators, applied by means of a braking system according to any one of Claims 1 to 6, **characterized in that** it comprises the steps consisting in:

- computing the value of the differential coefficient (W) of the set acceleration of the vehicle based on a braking setting resulting from the actuation of a brake pedal of the vehicle, an increase (X) in the stopping distance of the vehicle resulting from the application of a softened deceleration setting ($\gamma$a) and a final deceleration setting ($\gamma$f) to be achieved until the vehicle stops;
- computing the value of a softened deceleration setting ($\gamma$a) based on the computed value of the differential coefficient of the set acceleration based on the final deceleration setting ($\gamma$f) and the speed of the vehicle;
- determining the minimum value amongst the softened deceleration setting ($\gamma$a) and the braking setting ($\gamma$c) resulting from the actuation of the brake pedal of the vehicle, the deceleration setting (C) being generated from the minimum value thus determined.

8. Method according to Claim 7, **characterized in that**, prior to computing the differential coefficient of the set acceleration, the braking setting is computed by computing the total of a deceleration setting generated directly from an action on the brake pedal and a deceleration component resulting from the interferences likely to influence the braking.

9. Method according to Claim 8, **characterized in that**, prior to computing the differential coefficient of the set acceleration, a final deceleration setting is computed by extracting the maximum value from among the said final deceleration setting and the said deceleration component.

10. Method according to Claim 9, **characterized in that** following the step of determining the minimum value between the softened deceleration setting and the braking setting, the braking command is computed by totalling the said minimum value and the deceleration component resulting from the interferences likely to influence the braking.

**Patentansprüche**

1. Bremssystem für Kraftfahrzeug, das Bremsbetätiger (12) und einen zentralen Rechner (10) aufweist, der Mittel aufweist, um einen Verlangsamungssollwert ausgehend von einem Bremssollwert zu erstellen, der aus dem Betätigen eines Bremspedals des Fahrzeugs hervorgeht, um das Verlangsamen des Fahrzeugs von dem Verlangsamungssollwert abhängig zu machen, **dadurch gekennzeichnet, dass** der Rechner (10) Mittel zum Berechnen eines gedämpften Verlangsamungssollwerts ($\gamma$a) ausgehend von einem Differential (W) des Beschleunigungssollwerts des Fahrzeugs, der Geschwindigkeit (V) des Fahrzeugs und von einem Endverlangsamungssollwert ($\gamma$f), der bis zum Stillstehen des Fahrzeugs zu erreichen ist, aufweist, wobei der Verlangsamungssollwert (C) aus dem Mindestwert zwischen dem gedämpften Verlangsamungssollwert ($\gamma$a) und dem Bremssollwert ($\gamma$c) besteht.

2. Bremssystem nach Anspruch 1, **dadurch gekennzeichnet, dass** der gedämpfte Verlangsamungssollwert ($\gamma$a) gemäß der folgenden Formel erstellt wird:

$$\gamma a = \sqrt{\gamma f^{2} + 2VW}$$

in der:

    $\gamma$f der Endverlangsamungssollwert,
    V die Geschwindigkeit des Fahrzeugs und
    W das Differential des Beschleunigungssollwerts des Fahrzeugs ist.

3. Bremssystem nach Anspruch 2, **dadurch gekennzeichnet, dass** der Rechner (10) Mittel zum Berechnen eines Werts des Differentials (W) des Beschleunigungssollwerts des Fahrzeugs aufweist, die es erlauben, eine Steigerung X des Bremswegs des Fahrzeugs zu erzielen, die aus dem Anwenden eines gedämpften Verlangsamungssollwerts hervorgeht, gemäß der Gleichung:

$$W = \sqrt{\frac{1}{24X\gamma c}(\gamma c - \gamma f)^{3}(\gamma c + 3\gamma f)}$$

wobei $\gamma$c der Bremssollwert ist.

4. Bremssystem nach einem der Ansprüche 1 bis 3, **dadurch gekennzeichnet, dass** der Rechner (10) ferner Mittel zum Berücksichtigen einer Verlangsamungskomponente aufweist, die direkt ausgehend von einer Aktion auf das Bremspedal erstellt wird, sowie einer externen Störungskomponente, die auf das Verlangsamen des Fahrzeugs einwirken kann, wobei die Summe der Verlangsamungskomponente und der externen Störungskomponente die Bremssteuerung bildet.

5. Bremssystem nach Anspruch 4, **dadurch gekennzeichnet, dass** die externe Störungskomponente eine Verlangsamungskomponente ist, die aus dem Fahren des Fahrzeugs auf einer Steigung hervorgeht.

6. Bremssystem nach einem der Ansprüche 4 und 5, **dadurch gekennzeichnet, dass** der Rechner (10) ferner Mittel zum Schätzen der Störungskomponente ausgehend von einer Modellierung des Bremssystems aufweist.

7. Verfahren zum Erstellen eines Verlangsamungssollwerts für Kraftfahrzeug-Bremsbetätiger, umgesetzt mittels eines Bremssystems nach einem der Ansprüche 1 bis 6, **dadurch gekennzeichnet, dass** es die Schritte aufweist, die aus Folgendem bestehen:

    - Berechnen des Werts des Differentials (W) der Sollwertbeschleunigung des Fahrzeugs ausgehend von einem Bremssollwert, der sich aus dem Betätigen eines Bremspedals des Fahrzeugs, einer Steigerung (X) des Bremswegs des Fahrzeugs, die sich aus dem Anwenden eines gedämpften Verlangsamungssollwerts ($\gamma$a) und aus einem Endverlangsamungssollwert ($\gamma$f), der bis zum Stillstehen des Fahrzeugs zu erreichen ist, ergibt,
    - Berechnen des Werts eines gedämpften Verlangsamungssollwerts ($\gamma$a) ausgehend von dem berechneten Wert des Beschleunigungssollwertdifferentials ausgehend von dem Endverlangsamungssollwert ($\gamma$f) und der Geschwindigkeit des Fahrzeugs,
    - Bestimmen des Mindestwerts zwischen dem gedämpften Verlangsamungssollwert ($\gamma$a) und dem Bremssollwert ($\gamma$c), der sich aus dem Betätigen des Bremspedals des Fahrzeugs ergibt, wobei der Verlangsamungssollwert (C) ausgehend von dem so bestimmten Mindestwert erstellt wird.

8. Verfahren nach Anspruch 7, **dadurch gekennzeichnet, dass** man vor dem Berechnen des Verlangsamungssollwertdifferentials den Bremssollwert durch Berechnen der Summe eines Verlangsamungssollwerts, der direkt ausgehend von einer Aktion auf das Bremspedal erstellt wird, und einer Verlangsamungskomponente, die aus Störungen hervorgeht, die auf das Bremsen einwirken können, berechnet.

9. Verfahren nach Anspruch 8, **dadurch gekennzeichnet, dass** man vor dem Berechnen des Verlangsamungssollwertdifferentials einen Endverlangsamungssollwert durch Extrahieren des maximalen Werts zwischen dem Endverlangsamungssollwert und der Verlangsamungskomponente berechnet.

10. Verfahren nach Anspruch 9, **dadurch gekennzeichnet, dass** man nach dem Schritt des Bestimmens des Mindestwerts zwischen dem gedämpften Verlangsamungssollwert und dem Bremssollwert die Bremssteuerung durch Summieren des Mindestwerts mit der Verlangsamungskomponente, die sich aus Störungen ergibt, die auf das Bremsen einwirken können, berechnet.

## FIG_1

# FIG_2

# FIG_3

P

FIG_4

$\gamma_c$

22

24

$\gamma_c < \gamma_F$

Oui

Non

$\gamma_c$

C

26

28

$\gamma_c$

$\gamma_F$

X

30

W

V

32

$\gamma_a$

Min

C

# FIG_5

FIG_6

FIG_7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4760529 A